# EUROPÄISCHE PATENTANMELDUNG

(11) **EP 2 377 640 A1**
(43) Veröffentlichungstag der Anmeldung: **19.10.2011**
(21) Anmeldenummer: 10004970.9
(22) Anmeldetag: 11.05.2010
(51) Int. Cl.: B23K 26/26, B60P 1/28, B62D 27/02, B62D 33/02

(54) **Verfahren zur Herstellung eines Muldenkörpers, insbesondere einer Kippmulde für ein Transportfahrzeug ; unter Verwednung von Laserschweissen ; entsprechender Muldenkörper, insbesondere Kippmulde für ein Transportfahrzeug**

(30) Priorität: 16.04.2010 EP 10004034
(71) Anmelder: Ferro Umformtechnik GmbH & Co. KG, 48703 Stadtlohn (DE)
(72) Erfinder: Dünne, Heinrich, 48683 Ahaus-Graes (DE)
(74) Vertreter: Patentanwälte Thömen & Körner

(57) **Zusammenfassung**

Die Erfindung bezieht sich auf ein Verfahren zur Herstellung eines Muldenkörpers, insbesondere einer Kippmulde für ein Transportfahrzeug, sowie auf einen Muldenkörper, insbesondere auf eine Kippmulde für ein Transportfahrzeug unter Verwendung eines Laserschweisverfahrens zum Verbinden von plattenförmigen Modulen mit vorgegebenen Materialgüten und -stärken sowie mit vorgegebenen Abmessungen.

## Beschreibung

Die Erfindung betrifft ein Verfahren zur Herstellung eines Muldenkörpers, insbesondere einer Kippmulde für ein Transportfahrzeug, sowie einen Muldenkörper, insbesondere eine Kippmulde für ein Transportfahrzeug.

Muldenkörper, insbesondere Kippmulden für Transportfahrzeuge, sind in vielfältigen Ausgestaltungen bekannt. Beispiele offenbart die EP 1319584 A1. Diese Muldenkörper dienen bekanntermaßen der Beförderung schüttfähiger Transportgüter wie beispielsweise Sand, Kies, Bruchsteine, Bauschutt, Schrott und dergleichen. Die Muldenkörper sind üblicherweise nach oben offen. An ihrer zum Fahrzeugbug weisenden Vorderseite sind sie durch eine Wand verschlossen, während an ihrer zum Fahrzeugheck weisenden Rückseite eine Schüttöffnung vorgesehen ist. Diese kann durch eine hochgezogene Schütte oder eine verriegelbare Klappe oder Tür verschlossen werden.

Bekannte Muldenkörper, insbesondere Kippmulden für Transportfahrzeuge, weisen üblicherweise ein im wesentlichen U-förmiges oder halbkreisförmiges Muldenkörperprofil auf, wobei die Wahlmöglichkeit des Querschnittprofils und damit die Anpassung an das jeweilige für den Einsatz gewünschte Anforderungsprofil nachteilig begrenzt sind. Die Muldenkörper sind üblicherweise aus einer Vielzahl von langgestreckten Wandungselementen zusammengesetzt, bei den es sich üblicherweise um Blechstreifen bzw. sogenannte Kantbleche handelt. Für diese haben sich genormte Vergütungsstähle mit Streckgrenzen von 235 MPa bis 1300 MPa durchgesetzt und etabliert, wodurch eine Reduzierung des Konstruktionseigengewichtes erreicht wird, welche sich sehr günstig auf die Nutz- und Achslasten von Transportfahrzeugen auswirkt. Die Wandungselemente sind bekanntermaßen über Längsschweißnähte miteinander verbunden, wobei diese nachteilig nur in Bereichen geringer Beanspruchung angeordnet sind, so dass ihre Anordnung und damit die Freiheit in der Herstellung eines dem gewünschten Anforderungsprofil entsprechenden Muldenkörpers nicht beliebig wählbar sind. Zur Herstellung der Längsschweißnähte wird bekanntermaßen das so genannte MAG-Schweißen (Metallschweißen mit aktiven Gasen) angewandt, welches nachteilig einen mehrlagigen Nahtaufbau erfordert. Dies führt nachteilig zu sehr hohen Eigenspannungen im Muldenkörper. Diese Eigenspannungen, insbesondere Längs-, Quer- und Winkelspannungen, können den Muldenkörper verformen und zu Verdrillungen führen, die durch aufwendiges mechanisches und/oder thermisches Richten minimiert werden müssen. Ein völliges Beseitigen der Spannungen im Muldenkörper ist jedoch kaum möglich. Im späteren Einsatz des Muldenkörpers können diese verbliebenen Spannungen zu Problemen in der Funktionalität führen. Nachteilig ist außerdem, dass Anlasseffekte eine Entfestigung im Schweißgut verursachen und zudem die Gefahr von Bindefehlern und nichtmetallischen Einschlüssen sowie eine geringe Produktivität durch den Einsatz des MAG-Schweißens bestehen. Schließlich ist nachteilig, dass die Herstellung der genannten Längsschweißnähte einen erhöhten Aufwand an Nahtvorbereitungen, Bauteilfixierungen und nachfolgenden Richtarbeiten erfordert.

Als weiterer Nachteil hat sich heraus gestellt, dass das für das MAG-Schweißen erforderliche Fixieren der Wandungselemente zueinander nachteilig sehr aufwendig ist und gegebenenfalls zusätzliche Vorrichtungen erfordert. Weiterhin ist die Herstellung der genannten Längsschweißnähte zur Ausbildung eines Muldenkörpers sehr zeit-, kosten- und energieintensiv.

Nachteilig ist weiterhin, dass an den Schweißnahtkanten je nach Materialstärke oftmals sehr aufwendig Fasen hergestellt werden. Zudem ist nachteilig, dass die Schweißnaht oftmals durch eine so genannte Schweißbadsicherung vor dem Einfallen des Schmelzbades geschützt werden muss. Bei einer Schweißbadsicherung handelt es sich um einen Blechstreifen, oder um eine wärmeableitende Schiene, beispielsweise aus Kupfer, oder um eine wärmebeständige Schiene, beispielsweise aus Keramik, die an das zu schweißende Bauteil angebracht wird, um das Durchfallen des Schweißgutes zu verhindern. Insgesamt führen das genannte MG-Schweißverfahren zur Herstellung eines geschweißten Muldenkörpers zu einer geringen Produktivität und zu einer geminderten Funktionssicherheit.

Muldenkörper werden in der Regel in kleineren Serien bzw. in vergleichsweise geringen Stückzahlen entsprechend dem speziellen Anforderungsprofil eines Anwenders in oftmals variierenden Bauausführungen, wie z.B. Formen, Abmessungen usw., hergestellt. Fertigungstechnisch ist die Herstellung von Muldenkörpern daher relativ aufwendig und kostenintensiv. Es wäre deshalb wünschenswert, die Herstellung von Muldenkörpern weiter zu rationalisieren und technisch zu vereinfachen.

Nachteilig ist weiterhin, dass der Bodenbereich eines Muldenkörpers, insbesondere einer Kippmulde, insbesondere im Bereich der Schüttöffnung, infolge des durch das Schüttgut bewirkten Abriebs einem erhöhten Verschleiß unterworfen ist. Dieser Effekt ist bei harten, kantigen oder spitzen Schüttgütern besonders ausgeprägt. Auch an anderen Stellen tritt nachteilig ein erhöhter Verschleiß der Kippmuldenkörper durch Abrasion auf.

Es ist bekannt, den Bodenbereich des Muldenkörpers aufwendig mit einer Stahlblechlage aufzudoppeln. Nachteile dieser Aufdoppelung sind in der EP 1319584 A1 beschrieben.

Der Erfindung liegt die Aufgabe zugrunde, die vorgenannten Nachteile des Standes der Technik zu vermeiden und ein technisch einfacheres Verfahren zur Herstellung eines Muldenkörpers bereitzustellen sowie ein Muldenkörper selbst derart zu verbessern, dass auch beim Transport von abrasiven Schüttgütern ein erhöhter Verschleiß des Muldenkörpers, Korrosionsprobleme, unnötige Nutzlastverluste sowie aufwendige und komplizierte Herstellungstechniken vermieden werden können. Eine weitere Aufgabe der Erfindung besteht darin, das Eigengewicht des Muldenkörpers bei gleicher oder verbesserter Steifigkeit sowie eine höhere Funktionalität und/oder eine höhere Einsatzsicherheit des Muldenkörpers zu erreichen. Eine weitere Aufgabe der Erfindung besteht darin, einen Muldenkörper insgesamt leistungsfähiger auszugestalten.

Gelöst wird diese Aufgabe mit einem Verfahren zur Herstellung eines Muldenkörpers, insbesondere einer Kippmulde für ein Transportfahrzeug, welches folgende Schritte umfasst:
a) Bereitstellen von plattenförmigen Modulen vorgegebener Materialgüte, insbesondere Blechgüte, und -stärke, insbesondere Blechstärke sowie vorgegebener Abmessung,
b) Anordnen der Module zueinander entsprechend eines für den anzufertigenden Muldenkörper vorbestimmten Anforderungsprofils, wobei die Kanten der sich gegenüberliegend angeordneten Module stumpf aneinander stoßen und I-Nähte bilden,
c) Verbinden der Module durch Laserhybridschweißen der gebildeten Nähte unter Verwendung eines Zusatzstoffes oder vorzugsweise durch Laserschmelzschweißen der gebildeten Nähte ohne Verwendung eines Zusatzstoffes und
d) polygonales Kanten der zusammengeschweißten Module zur Herstellung eines vorgegebenen Muldenkörperprofils.

Vorteilhaft können der ebene modular aufgebaute Muldenkörper oder einzelne plattenförmige Module vor dem Kanten vorzugsweise durch Laserschneiden auf ein vorgegebenes Fertigmaß geschnitten werden, wobei besonders bevorzugt bereits Konturen, beispielsweise Montagelöcher, Anfangs- und/oder Endkonturen, angefertigt werden können.

Die Schweißnähte können konstruktiv so gelegt werden, dass sie möglichst geringe Auswirkungen auf die Eigenschaften oder auf die Funktion des Muldenkörpers in einer späteren Anwendung oder auf das Aussehen des Muldenkörpers hat. So können die Schweißnähte auch an einer Längskante oder innerhalb einer Längsseite des Muldenkörpers verlaufen.

Die beim Laserhybridschweißen oder vorzugsweise Laserschweißen vorgesehenen hohen Energiedichten auf kleinster Fläche ermöglichen das Verschweißen von unterschiedlichen Materialstärken mit einer Schweißlage, wobei die Einschweißtiefe bzw. die Materialstärke abhängig von der vorhandenen Laserleistung ist. Es kann hierbei von Vorteil sein, wenn die Einschweißtiefe bis 20 mm, vorzugsweise 1 mm bis 20 mm, besonders bevorzugt 2 mm bis 20 mm, ganz besonders bevorzugt 2 mm bis 15 mm und noch bevorzugter 2 mm bis 10 mm beträgt.

Eine zusätzliche Schweißnahtvorbereitung ist beim Einsatz der genannten Schweißverfahren vorteilhaft nicht erforderlich. Eine Schweißbadsicherung kann bei dem erfindungsgemäßen Verfahren ebenfalls entfallen. Vorteilhaft wird durch das erfindungsgemäße Verfahren nur eine Schweißnaht von wenigen Millimetern, vorzugsweise bis maximal 3 mm, besonders bevorzugt bis maximal 2 mm Breite erreicht, und gleichzeitig eine hohe, vorzugsweise durchgängige Einschweißtiefe bewirkt.

Die zu schweißenden Module werden im Bereich um die Schweißnaht deutlich weniger erwärmt. Spannungen und daraus resultierende Verformungen werden kaum festgestellt. Ein aufwendiges Richten der Bauteile entfällt damit ganz. Weiterhin kann nachgewiesen werden, dass laserhybridgeschweißte oder vorzugsweise lasergeschweißte Nähte den Eigenschaften des Grundwerkstoffes entsprechen. Ein derartig hergestellter Muldenkörper zeichnet sich durch eine hohe Funktionalität und Einsatzsicherheit aus. Beim Laserschweißen ist die Längsschweißnaht als I-Naht ausgebildet. Dies ist quasi auch beim Laserhybridschweißen der Fall, wobei die I-Naht hierbei leicht in eine V-Naht mit einem Öffnungswinkel von bis zu 15°, vorzugsweise von bis zu 10°, besonders bevorzugt von bis zu 6°, übergeht. Im Rahmen der Erfindung gilt dies für das Laserhybridschweißen aber immer noch als I-Naht.

Die Materialgüte, insbesondere die Blechgüte, insbesondere die Festigkeit und Verschleißanfälligkeit wird durch die Art des Grundwerkstoffs bestimmt.

Für bestimmte Einsatzzwecke kann es von Vorteil sein, wenn der Grundwerkstoff zur Bildung eines oder mehrer Module S690 QL (Werkstoffnummer 1.8928) ist. Für gewisse Einsatzzwecke kann es von Vorteil sein, wenn der Grundwerkstoff zur Bildung eines oder mehrer Module S960 QL (Werkstoffnummer 1.8933) ist. Für gewisse andere Einsatzzwecke kann es von Vorteil sein, wenn der Grundwerkstoff zur Bildung eines oder mehrer Module S1100 QL (Werkstoffnummer 1.8942) ist. Für wieder andere gewisse Einsatzzwecke kann es von Vorteil sein, wenn der Grundwerkstoff zur Bildung eines oder mehrer Module S1300 QL (Werksnorm der SSAB AB) ist

Für bestimmte Anwendungen kann es von Vorteil sein, wenn der Grundwerkstoff zur Bildung eines oder mehrer Module ein Baustahl des Typs S235JR (Werkstoffnummer 1.0038) ist. Für gewisse Anwendungen kann es von Vorteil sein, wenn der Grundwerkstoff zur Bildung eines oder mehrer Module Typs S355J2 (Werkstoffnummer 1.0577) ist. Für gewisse andere Anwendungen kann es von Vorteil sein, wenn der Grundwerkstoff zur Bildung eines oder mehrer Module in Baustahl des Typs S355MC (Werkstoffnummer 1.0976) ist. Für ganz andere Anwendungen kann es von Vorteil sein, wenn der Grundwerkstoff zur Bildung eines oder mehrer Module ein Baustahl des Typs S380 TM ist

Für bestimmte Einsatzfälle kann es von Vorteil sein, wenn der Grundwerkstoff zur Bildung eines oder mehrer Module S700MC (Werkstoffnummer 1.8974) ist. Für gewisse Einsatzfälle kann es von Vorteil sein, wenn der Grundwerkstoff zur Bildung eines oder mehrer Module S890 QL (Werkstoffnummer 1.8983) ist.

Für bestimmte Zwecke kann es von Vorteil sein, wenn der Grundwerkstoff zur Bildung eines oder mehrer Module ein verschleißfester Stahl des Typs HB 400 (Werkstoffnummer 1.8714) ist. Für gewisse Zwecke kann es von Vorteil sein, wenn der Grundwerkstoff zur Bildung eines oder mehrer Module ein verschleißfester Stahl des Typs HB 450 (Werkstoffnummer 1.8722) ist. Für gewisse andere Zwecke kann es von Vorteil sein, wenn der Grundwerkstoff zur Bildung eines oder mehrer Module ein verschleißfester Stahl des Typs HB500 (Werkstoffnummer 1.8734) ist.

Für bestimmte Fälle kann es von Vorteil sein, wenn der Grundwerkstoff zur Bildung eines oder mehrer Module ein unter der Bezeichnung DP 550 (Werkstoffnummer 1.0931) bekannter Dualphasenstahl ist. Für bestimmte andere Fälle kann es von Vorteil sein, wenn der Grundwerkstoff zur Bildung eines oder mehrer Module ein unter der Bezeichnung DP 600 (Werkstoffnummer 1.0936) bekannter Dualphasenstahl ist. Für ganz andere bestimmte Fälle kann es von Vorteil sein, wenn der Grundwerkstoff zur Bildung eines oder mehrer Module ein unter der Bezeichnung DP 700 (Werknorm der SSAB AB) bekannter Dualphasenstahl ist. Für gewisse Fälle kann es von Vorteil sein, wenn der Grundwerkstoff zur Bildung eines oder mehrer Module ein unter der Bezeichnung DP 900 bzw. Docol 900M (Werksnorm der SSAB AB) bekannter Dualphasenstahl ist. Für manche Fälle kann es von Vorteil sein, wenn der Grundwerkstoff zur Bildung eines oder mehrer Module ein unter der Bezeichnung DP 1000 bzw. Docol 1000M (Werksnorm der SSAB AB) bekannter Dualphasenstahl ist. Für gewisse andere Fälle kann es von Vorteil sein, wenn der Grundwerkstoff zur Bildung eines oder mehrer Module ein unter der Bezeichnung DP 1200 bzw. Docol 1200M (Werksnorm der SSAB AB) bekannter Dualphasenstahl ist. Für wieder andere Fälle kann es von Vorteil sein, wenn der Grundwerkstoff zur Bildung eines oder mehrer Module ein unter der Bezeichnung DP 1400 bzw. Docol 1400M (Werksnorm der SSAB AB) bekannter Dualphasenstahl ist. Für wieder ganz andere Fälle kann es von Vorteil sein, wenn der Grundwerkstoff zur Bildung eines oder mehrer Module ein unter der Bezeichnung DP 1500 bzw. Docol 1500M (Werksnorm der SSAB AB) bekannter Dualphasenstahl ist.

Durch das erfindungsgemäße Verfahren zur Herstellung einen Muldenkörpers ergeben sich insbesondere folgende Vorteile
- Optimierung der Nutzlast des Muldenkörpers, insbesondere durch zusammengeschweißte Module unterschiedlicher Materialstärken und -güten, insbesondere durch eine Reduzierung des Eigengewichts eins Muldenkörpers um 20 bis 30%,
- Erhöhung der Standzeit des Muldenkörpers, insbesondere durch die erfindungsgemäße Verschweißbarkeit von Modulen unterschiedlicher Materialgüte,
- Verschleißschutz auch in der Schweißnaht, insbesondere aufgrund des Laserschmelzschweißens,
- wirtschaftliche Herstellung und Anwendung des Muldenkörpers,
- Freiheit in der Wahl der Art des Muldenkörperprofils,
- Qualitätssteigerung durch weniger Verzug aufgrund der Schweißnaht,
- keine Verformung des Muldenkörpers aufgrund der niedrigen Wärmeeinflusszone über die gesamte Muldenkörperlänge, insbesondere kein aufwendiges Richten mehr erforderlich,
- keine Nachbearbeitung der Schweißnaht erforderlich,
- durch Laserschweißen lassen sich neue Material-, insbesondere Blechformate herstellen und so neue Formate für ein Muldenkörperprofil realisieren,
- Module können so ausgewählt und angeordnet werden, dass ein gleichmäßiger Verschleiß des Muldenkörpers erreicht wird,
- Senkung der Energiekosten und Schonung der Umwelt, insbesondere aufgrund des erfindungsgemäß angewandten Laserschmelzschweißprozesses und
- Schweißnähte sind überkantbar.

Es kann von Vorteil sein, wenn die Module derart angeordnet und ausgewählt werden, dass die im späteren Einsatz einer erhöhten Verschleißgefahr unterliegenden Bereiche des anzufertigenden Muldenkörpers durch ein oder mehrere Module gefertigt werden, die eine andere Materialgüte und/oder Materialstärke aufweisen als ein oder mehrere Module, die in einem Bereich des Muldenkörpers angeordnet sind, der im späteren Einsatz einem geringeren Verschleiß unterliegt.

Zweckmäßigerweise können die Kanten der Module derart stumpf aneinander stoßen, dass ein Fügespalt vorzugsweise von weniger als 0,1 mm, besonders bevorzugt von weniger als 0,05 mm, ausgebildet wird.

Für bestimmte Einsatzzwecke kann es vorteilhaft sein, wenn gepulst geschweißt wird. Für gewisse, bevorzugte Einsatzzwecke kann es vorteilhaft sein, wenn in Form eines Dauerstrichs geschweißt wird.

Vorteilhaft kann die Schweißgeschwindigkeit in Abhängigkeit von der Einschweißtiefe vorzugsweise 0,4 bis 25 m/min, besonders bevorzugt 1 bis 15 m/min, betragen.

Es kann zweckmäßig sein, wenn das Schweißen von der Außenseite des Muldenkörpers aus erfolgt.

Die Erfindung betrifft weiterhin einen Muldenkörper, insbesondere eine Kippmulde für ein Transportfahrzeug, hergestellt insbesondere nach einem der Ansprüche 1 bis 7, welcher modulartig aufgebaut aus mehreren Modulen durch Laserschmelzschweißen zusammengesetzt ist und durch mehrfaches Abkanten ein Muldenkörperprofil aufweist. Der erfindungsgemäße Muldenkörper umfasst einen longitudinalen Boden aus wenigstens einem Bodenmodul, zwei longitudinalen Seitenteilen aus jeweils wenigstens einem Seitenwandmodul sowie gegebenenfalls zwei longitudinalen Obergurten aus jeweils wenigstens einem Obergurtmodul, wobei wenigstens ein Bereich des Muldenkörpers, der im Einsatz einem erhöhten Verschleiß unterliegt, aus einem oder mehreren Modulen gefertigt ist, welche eine andere, insbesondere eine weniger Verschleiß anfällige Materialgüte und/oder eine andere, insbesondere größere Materialstärke aufweisen als ein oder mehrere Module, die in wenigstens einem Bereich des Muldenkörpers angeordnet sind, der einem geringeren Verschleiß unterliegt.

Es kann von Vorteil sein, wenn der Boden, die Seiteteile und die gegebenenfalls vorhandenen Obergurte aus Modulen zusammengeschweißt sind, die jeweils eine Materialstärke von 2 bis 10 mm aufweisen, wobei die Materialstärke wenigstens eines Bodenmoduls vorzugsweise 4 bis 8 mm, die Materialstärke je wenigstens eines Seitenteilmoduls vorzugsweise 3 bis 6 mm und/oder die Materialstärke je wenigstens eines gegebenenfalls vorhandenen Obergurtmoduls vorzugsweise 2 bis 6 mm betragen.

Es kann vorteilhaft sein, wenn die Materialstärke wenigstens eines Bodenmoduls größer ist als die Materialstärke je wenigstens eines Seitenteilmoduls und/oder je wenigstens eines gegebenenfalls vorhandenen Obergurtmoduls und/oder dass die Materialstärke je wenigstens eines Seitenteilmoduls größer ist als die Materialstärke je wenigstens eines gegebenenfalls vorhandenen Obergurtmoduls.

Es kann zweckmäßig sein, wenn der Boden aus mehreren in Querrichtung nebeneinander angeordneten Bodenmodulen und/oder aus mehreren in Längsrichtung hintereinander angeordneten Bodenmodulen zusammengeschweißt ist.

Es kann von Vorteil sein, wenn ein oder mehrere Bodenmodule im Heckbereich des Muldenkörpers eine größere Materialstärke und/oder eine Verschleiß unanfälligere Materialgüte aufweisen als ein oder mehrere Bodenmodule im Bugbereich des Muldenkörpers.

Weiterhin kann es von Vorteil sein, wenn jedes Seitenteil aus mehreren in Querrichtung nebeneinander angeordneten Seiteneilmodulen und/oder aus mehreren in Längsrichtung hintereinander angeordneten Seitenteilmodulen zusammengeschweißt ist.

Außerdem kann es von Vorteil sein, wenn ein oder mehrere Seitenteilmodule im Heckbereich des Muldenkörpers eine größere Materialstärke und/oder eine Verschleiß unanfälligere Materialgüte aufweisen als ein oder mehrere Seitenteilmodule im Bugbereich des Muldenkörpers und/oder dass ein oder mehrere Seitenteilmodule im unteren Bereich des Muldenkörpers eine größere Materialstärke und/oder eine Verschleiß unanfälligere Materialgüte aufweisen als ein oder mehrere Seitenteilmodule im oberen Bereich des Muldenkörpers.

Die Erfindung betrifft schließlich noch die Verwendung eines Muldenkörpers, insbesondere nach einem der Ansprüche 8 bis 14, oder eines insbesondere nach einem Verfahren gemäß der Ansprüche 1 bis 7 hergestellten Muldenkörpers als Mulde, insbesondere Kippmulde in Transport- und Nutzfahrzeugen und landwirtschaftlichen Anhängern, als Behälter für die Containerwechselsystemtechnik oder als Gleisbauwannen für den Schienenfahrzeugbau.

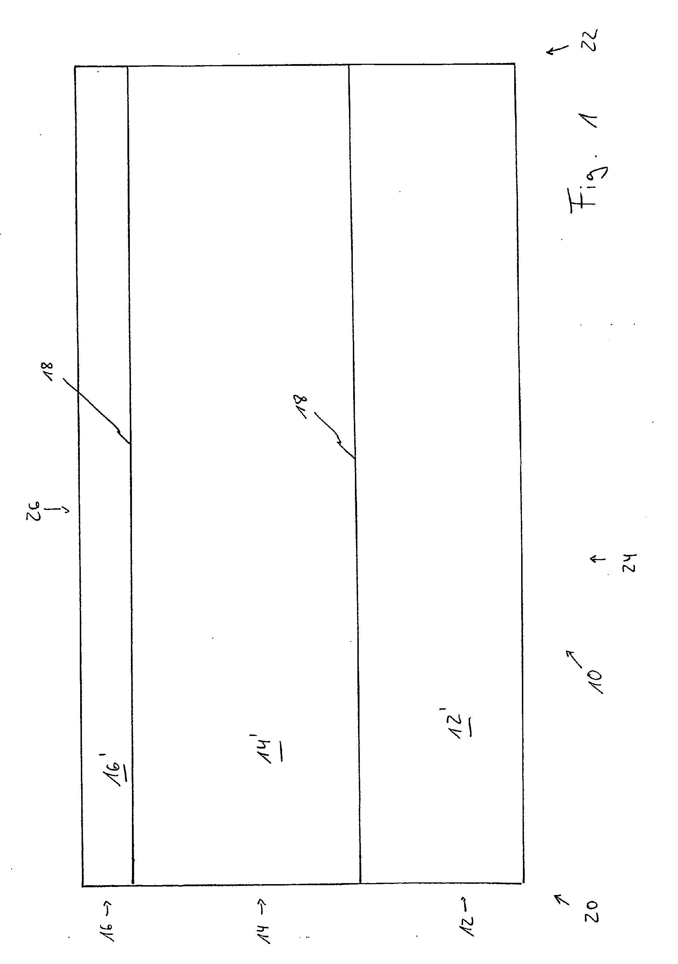

Nachfolgend wird die Erfindung anhand von Ausführungsbeispielen erläutert, die in der Zeichnung dargestellt sind. In dieser zeigen Fig. 1 bis 11 jeweils eine erfindungsgemäße Anordnung von lasergeschweißten Modulen zur Bildung eines Muldenkörpers. Zur besseren Übersicht ist hierbei nicht das gesamte Muldenkörperprofil dargestellt, sondern jeweils - rein schematisch - eine Hälfe des Muldenkörpers 10 in geschweißter, jedoch noch nicht in mehrfach gekanteter Form. Wenn im Folgenden von nur einem Seitenteil 14 oder nur einem Obergurt 16 des Muldenkörpers 10 gesprochen wird, so sollte klar sein, dass das Seitenteil 14 oder der Obergurt 16 zweimal im Muldenkörper 10 enthalten sind. Die erfindungsgemäß vorgesehenen Laserschweißnähte sind hierbei mit der Bezugsziffer 18 gekennzeichnet. Die genannten Werte haben zudem Fehlertoleranzen von ± 0,1 bis 0,3 mm.

Der erfindungsgemäße Muldenkörper 10 ist modulartig aufgebaut und aus mehreren Modulen durch Laserschmelzschweißen zusammengesetzt. Das Muldenkörperprofil wird vorzugsweise erst nach dem Zusammenschweißen der Module durch mehrfaches Abkanten erhalten. Dabei können diverse Muldenkörperprofile erhalten werden, da beim Abkanten keine Rücksicht auf die Laserschweißnähte 18 genommen werden braucht und selbst ein Abkanten entlang der Laserschweißnaht 18 möglich ist.

Der erfindungsgemäße Muldenkörper 10 umfasst einen longitudinalen Boden 12 aus wenigstens einem Bodenmodul 12', 12", 12"', zwei longitudinalen Seitenteilen 14 aus jeweils wenigstens einem Seitenwandmodul 14', 14", 14'a, 14"a, 14"'a, 14'b, 14"b, 14'c, wobei vorliegend - wie erwähnt - nur ein Seitenteil 14 dargestellt ist, und beispielsweise zwei longitudinale Obergurte 16 aus jeweils wenigstens einem Obergurtmodul 16', wobei vorliegend - wie erwähnt - ebenfalls nur ein Obergurt 16 dargestellt ist.

Erfindungsgemäß ist vorgesehen, dass ein Bereich des Muldenkörpers, der im Einsatz einem erhöhten Verschleiß unterliegt, aus einem oder mehreren Modulen gefertigt ist, welche eine andere Materialgüte und/oder Materialstärke aufweisen als ein oder mehrere Module, die in einem Bereich des Muldenkörpers angeordnet ist, der im Einsatz einem geringeren Verschleiß unterliegt.

Fig. 1 stellt einen relativ einfachen Aufbau des Muldenkörpers 10 aus einem Bodenmodul 12', einen Seitenteilmodul 14' und einem Obergurtmodul 16' dar. Bei den Laserschweißnähten 18 handelt es sich um Längsschweißnähte.

Die Materialstärke des jeweiligen Moduls 12', 14, 16' kann 2 bis 10 mm betragen, wobei die Materialstärke des Bodenmoduls 12' vorzugsweise 4 bis 8 mm, die Materialstärke des Seitenteilmoduls 14' vorzugsweise 3 bis 6 mm und die Materialstärke des Obergurtmoduls 16' vorzugsweise 2 bis 6 mm betragen. Vorzugsweise ist die Materialstärke des Bodenmoduls 12' größer als die Materialstärke des Seitenteilmoduls 14', wobei die Materialstärke des Seitenteilmoduls 14' vorzugsweise größer oder gleich der Materialstärke des Obergurtmoduls 16' ist.

Bevorzugt sind für die in Fig. 1 dargestellte Kombination von Modulen folgende Materialstärken:
1) 12'= 8 mm,14'= 6 mm und 16'= 4-6 mm
2) 12'= 7 mm,14'= 5 mm und 16'= 4 mm

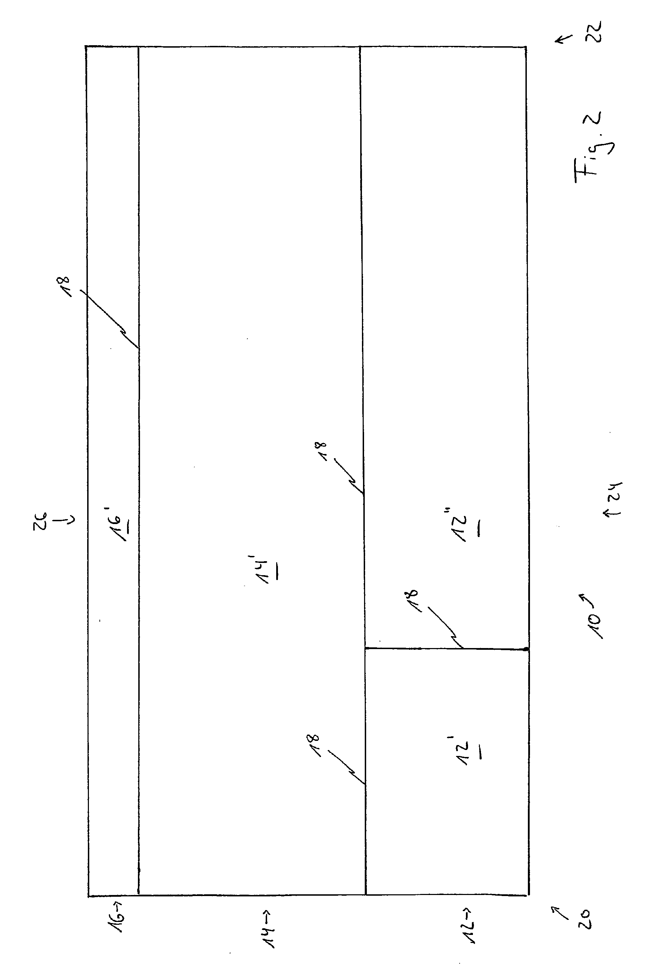

In Fig. 2 ist eine Weiterbildung des in Fig. 1 gezeigten Muldenkörpers 10 dargestellt, in welcher der Boden 12 in zwei Bodenmodule 12', 12" unterschiedlicher Materialstärke und/oder -güte unterteilt ist. Hierbei hat das Bodenmodul 12' im Heckbereich 20 des Muldenkörpers 10 eine größere Materialstärke und/oder eine Verschleiß unanfälligere Materialgüte als das Bodenmodul 12" im Bugbereich 22 des Muldenkörpers 10.

Bevorzugt sind für die in Fig. 2 dargestellte Kombination von Modulen folgende Materialstärken:
1) 12'=8mm,12"=7mm,14'=6mmund16'=4-6mm
2) 12'= 7 mm,12" = 6 mm, 14'= 5 mm und 16'=4 mm

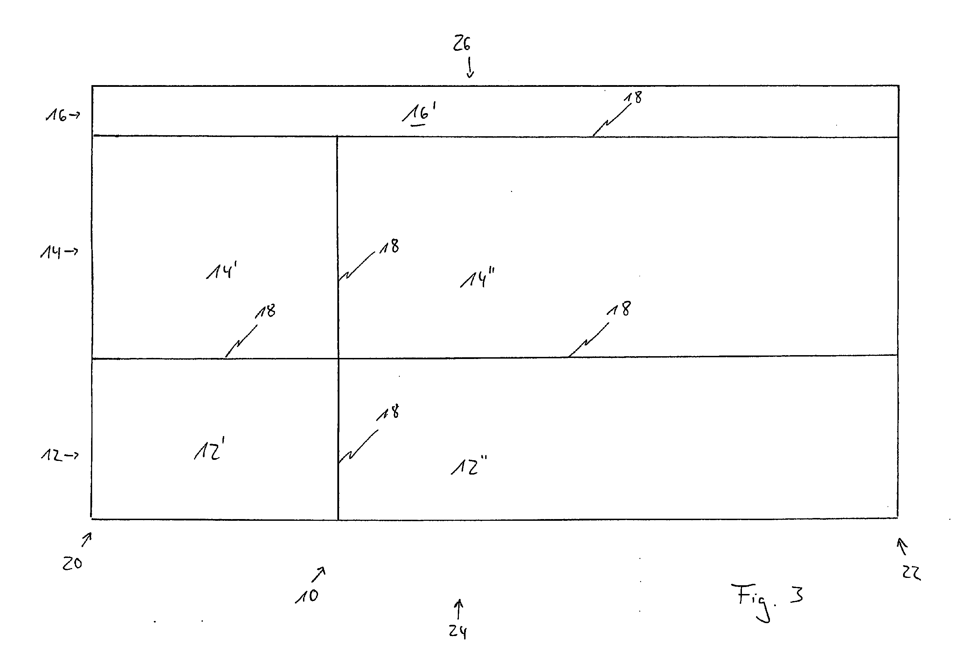

In Fig. 3 ist eine Weiterbildung des in Fig. 2 gezeigten Muldenkörpers 10 dargestellt, in welcher das Seitenteil 14 in zwei in Längsrichtung zusammengeschweißte Seitenteilmodule 14', 14" unterschiedlicher Materialstärke und/oder -güte unterteilt ist. Hierbei hat das Seitenteilmodul 14' im Heckbereich 20 des Muldenkörpers 10 eine größere Materialstärke und/oder eine Verschleiß unanfälligere Materialgüte als das Seitenteilmodul 14" im Bugbereich 22 des Muldenkörpers 10.

Bevorzugt sind für die in Fig. 3 dargestellte Kombination von Modulen folgende Materialstärken:
1) 12'=8mm,12"=7mm,14'=7mm,14"=6mmund16'=4-6mm
2) 12'=7mm,12"=6mm,14'=6mm,14"=5mmund16'=4mm

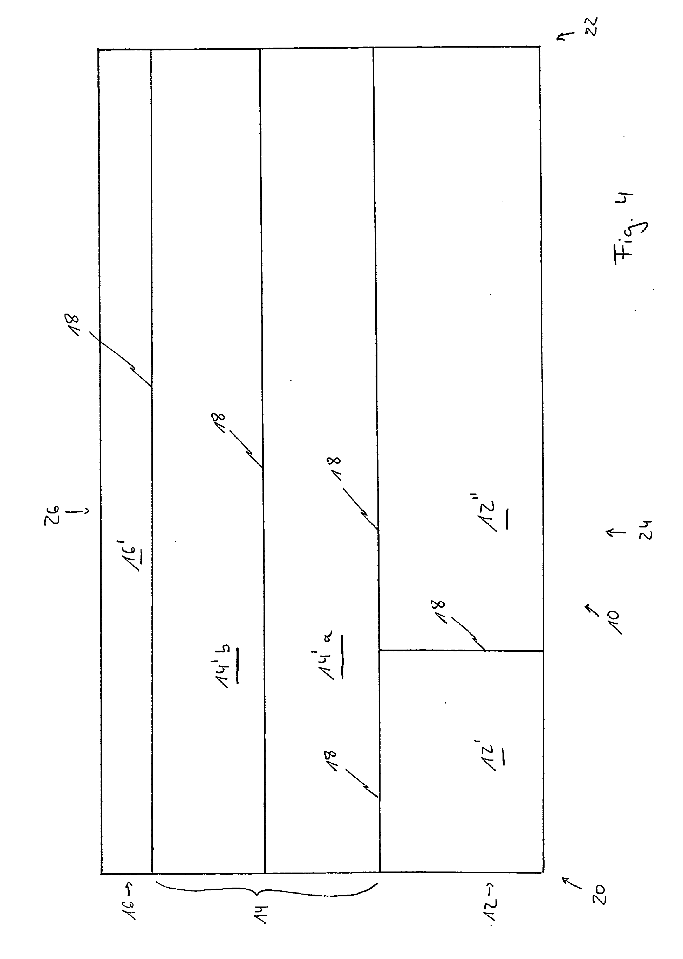

In Fig. 4 ist eine Weiterbildung des in Fig. 2 gezeigten Muldenkörpers 10 dargestellt, in welcher das Seitenteil 14 in zwei in Querrichtung zusammengeschweißte Seitenteilmodule 14'a, 14'b unterschiedlicher Materialstärke und/oder-güte unterteilt ist. Hierbei hat das Seitenteilmodul 14'a im unteren Bereich 24 des Muldenkörpers 10 eine größere Materialstärke und/oder eine Verschleiß unanfälligere Materialgüte als das Seitenteilmodul 14'b im oberen Bereich 26 des Muldenkörpers 10.

Bevorzugt sind für die in Fig. 4 dargestellte Kombination von Modulen folgende Materialstärken:
1) 12'=8mm,12"=7mm,14'a=7mm,14'b=6mmund16'=4-6mm
2) 12' = 7 mm, 12" = 6 mm, 14'a = 6 mm, 14'b = 5 mm und 16' = 4 mm

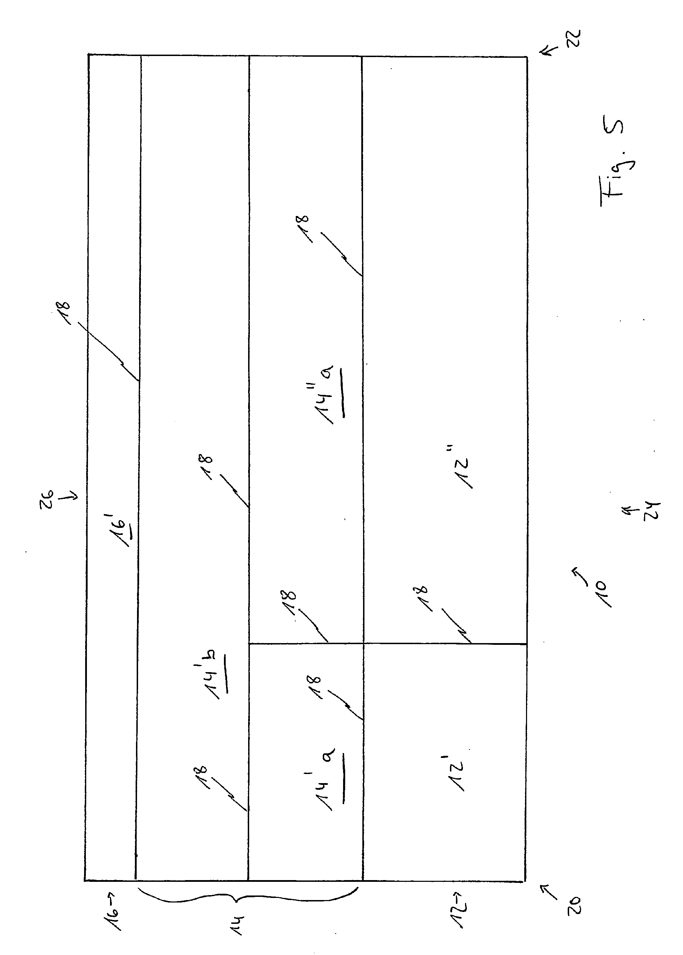

In Fig. 5 ist eine Weiterbildung des in Fig. 4 gezeigten Muldenkörpers 10 dargestellt, in welcher das in Fig. 4 gezeigte Seitenteilmodul 14'a in zwei in Längsrichtung zusammengeschweißte Seitenteilmodule 14'a, 14"a unterschiedlicher Materialstärke und/oder -güte unterteilt ist, wobei das Seitenteilmodul 14'a im Heckbereich 20 des Muldenkörpers 10 eine größere Materialstärke und/oder eine Verschleiß unanfälligere Materialgüte aufweist als das Seitenteilmodul 14"a im Bugbereich 22 des Muldenkörpers 10.

Bevorzugt sind für die in Fig. 5 dargestellte Kombination von Modulen folgende Materialstärken:
1) 12' = 8 mm, 12" = 7 mm, 14'a = 7 mm, 14"a = 6 mm, 14'b = 6 mm und 16'=4-6 mm
2) 12' = 7 mm, 12" = 6 mm, 14'a = 6 mm, 14"a = 5 mm, 14'b = 5 mm und 16'=4mm

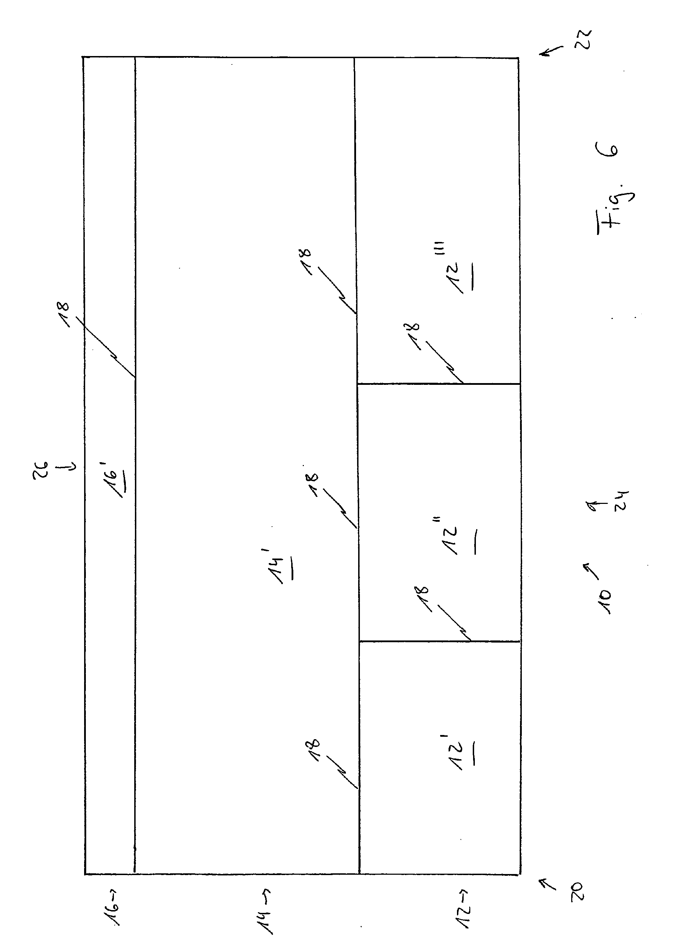

In Fig. 6 ist eine Weiterbildung des in Fig. 1 gezeigten Muldenkörpers 10 dargestellt, in welcher der Boden 12 in drei Bodenmodule 12', 12", 12"' unterschiedlicher Materialstärke und/oder -güte unterteilt ist. Hierbei hat das Bodenmodul 12' im Heckbereich 20 des Muldenkörpers 10 eine größere Materialstärke und/oder eine Verschleiß unanfälligere Materialgüte als das Bodenmodul 12" und dieses 12" wiederum eine größere Materialstärke und/oder eine Verschleiß unanfälligere Materialgüte als das Bodenmodul 12"' im Bugbereich 22 des Muldenkörpers 10.

Bevorzugt sind für die in Fig. 6 dargestellte Kombination von Modulen folgende Materialstärken:
1) 12'=8mm, 12"=6mm, 12"'=4mm, 14'=5 mm und 16'= 3 mm
2) 12'=8mm, 12"=6mm, 12"'=4mm, 14'=5 mm und 16'= 4 mm
3) 12'=8mm, 12"=6mm, 12"'=4mm, 14'=5mmund 16'=5mm
4) 12' = 7 mm, 12" = 6 mm, 12'" = 5 mm, 14' = 5 mm und 16' = 4 mm

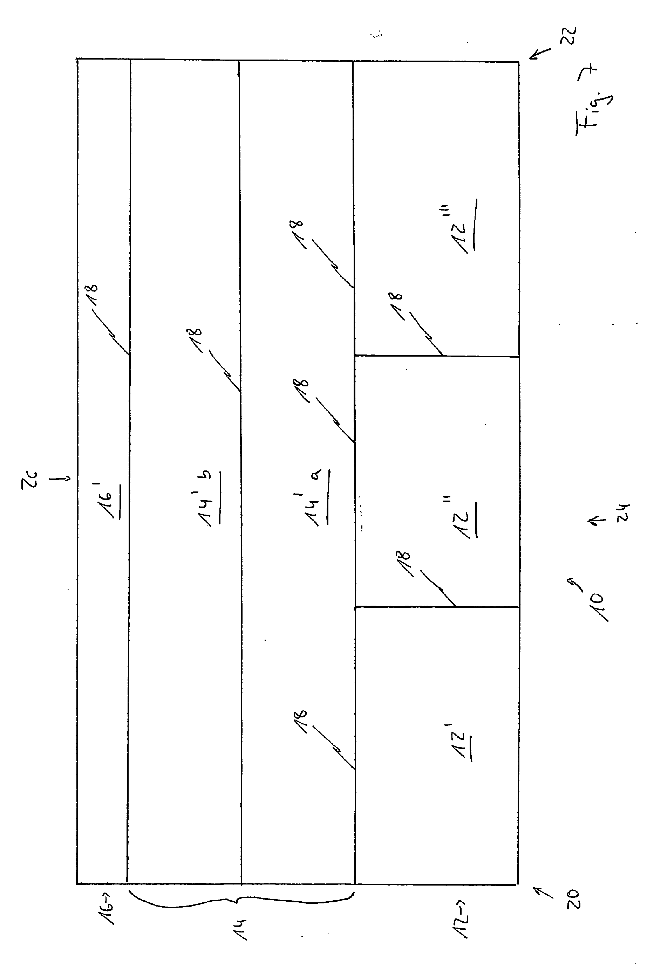

In Fig. 7 ist eine Weiterbildung des in Fig. 6 gezeigten Muldenkörpers 10 dargestellt, in welcher das Seitenteil 14 in zwei in Querrichtung zusammengeschweißte Seitenteilmodule 14'a, 14'b unterschiedlicher Materialstärke und/oder-güte unterteilt ist. Hierbei hat das Seitenteilmodul 14'a im unteren Bereich 24 des Muldenkörpers 10 eine größere Materialstärke und/oder eine Verschleiß unanfälligere Materialgüte als das Seitenteilmodul 14'b im oberen Bereich 26 des Muldenkörpers 10.

Bevorzugt sind für die in Fig. 7 dargestellte Kombination von Modulen folgende Materialstärken:
1) 12' = 8 mm, 12" = 6 mm, 12"' = 4 mm, 14'a = 5 mm, 14'b = 4 mm und 16'=2mm
2) 12' = 8 mm, 12" = 6 mm, 12'" = 4 mm, 14'a = 5 mm, 14'b = 4 mm und 16'=3mm
3) 12' = 7 mm, 12" = 5 mm, 12"' = 4 mm, 14'a = 4 mm, 14'b = 3 mm und 16' = 2 mm

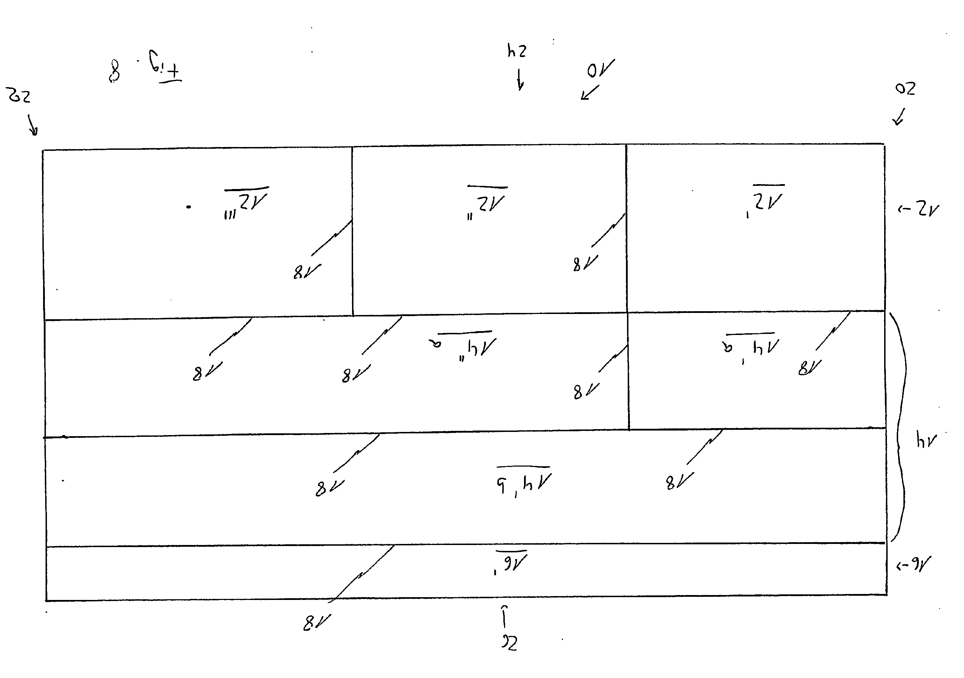

In Fig. 8 ist eine Weiterbildung des in Fig. 7 gezeigten Muldenkörpers 10 dargestellt, in welcher das in Fig. 7 gezeigte Seitenteil modul 14'a in zwei in Längsrichtung zusammengeschweißte Seitenteilmodule 14'a, 14"a unterschiedlicher Materialstärke und/oder -güte unterteilt ist, wobei das Seitenteilmodul 14'a im Heckbereich 20 des Muldenkörpers 10 eine größere Materialstärke und/oder eine Verschleiß unanfälligere Materialgüte aufweist als das Seitenteilmodul 14"a im Bugbereich 22 des Muldenkörpers 10.

Bevorzugt sind für die in Fig. 8 dargestellte Kombination von Modulen folgende Materialstärken:
1) 12'= 8 mm, 12"=6mm, 12"'=4mm, 14'a=6mm, 14"a=5mm, 14'b = 4 mm und 16' = 3 mm
2) 12' = 8 mm, 12" = 6 mm, 12"' = 4 mm, 14'a = 6 mm, 14"a = 5 mm, 14'b = 4 mm und 16' = 4 mm
3) 12' = 7 mm, 12" = 5 mm, 12"' = 4 mm, 14'a = 4 mm, 14"a = 3 mm, 14'b = 3 mm und 16' = 2 mm

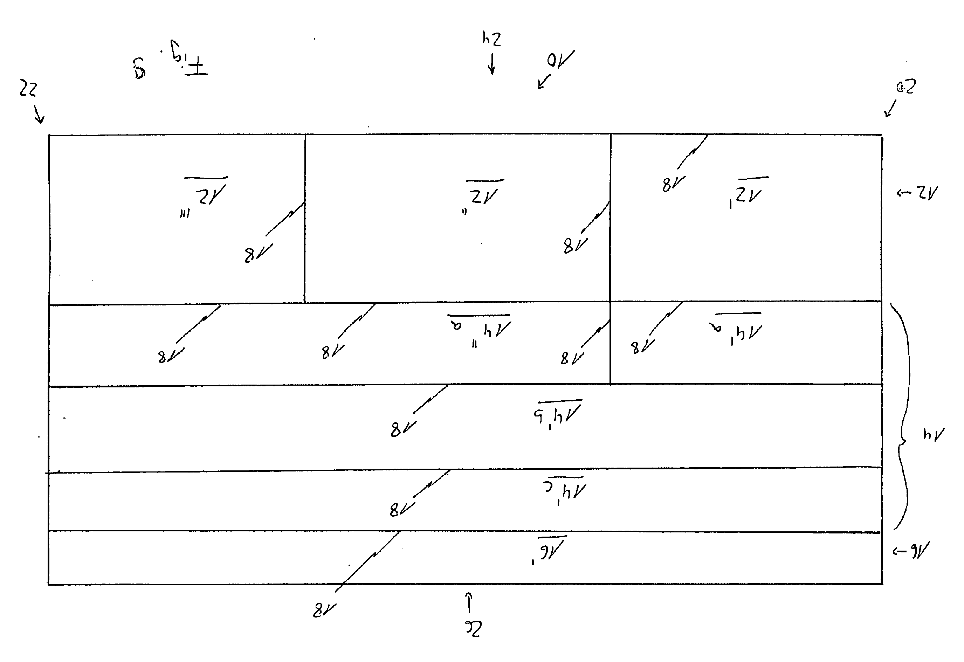

In Fig. 9 ist eine Weiterbildung des in Fig. 8 gezeigten Muldenkörpers 10 dargestellt, in welcher das in Fig. 8 gezeigte Seitenteilmodul 14'b in zwei in Querrichtung zusammengeschweißte Seitenteilmodule 14'b, 14'c unterschiedlicher Materialstärke und/oder -güte unterteilt ist, wobei das Seitenteilmodul 14'b im unteren Bereich 24 des Muldenkörpers 10 eine größere Materialstärke und/oder eine Verschleiß unanfälligere Materialgüte aufweist als das Seitenteilmodul 14'c im oberen Bereich 26 des Muldenkörpers 10.

Bevorzugt sind für die in Fig. 9 dargestellte Kombination von Modulen folgende Materialstärken:
1) 12' = 8 mm, 12" = 6 mm, 12"' = 4 mm, 14'a = 6 mm, 14"a = 5 mm, 14'b = 4 mm, 14'c = 3 mm und 16' = 2 mm
2) 12' = 8 mm, 12" = 6 mm, 12"' = 4 mm, 14'a = 6 mm, 14"a = 5 mm, 14'b = 4 mm, 14'c = 3 mm und 16' = 3 mm

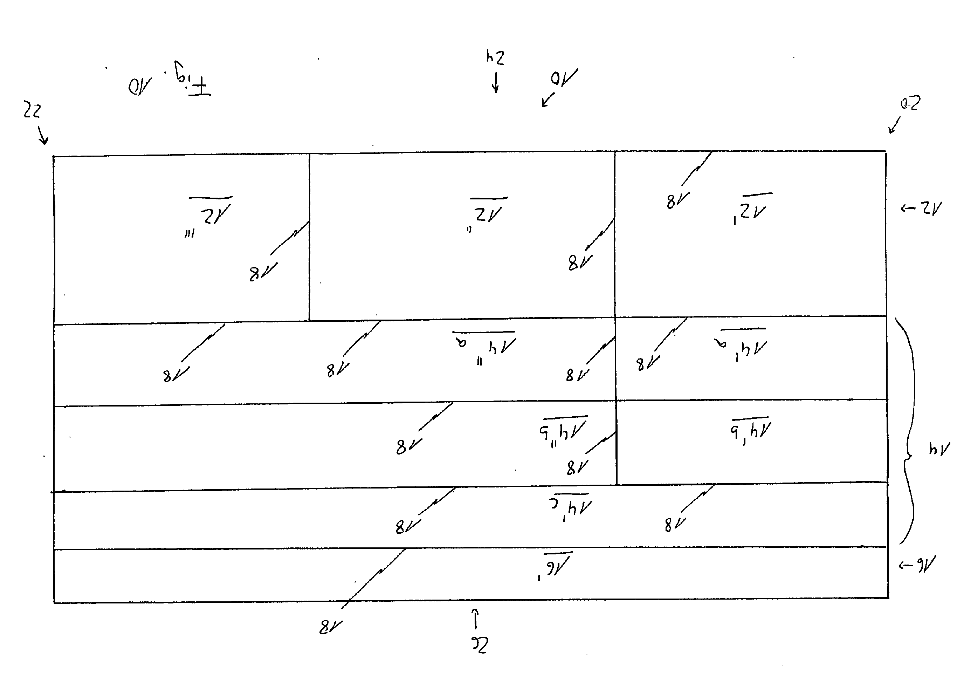

In Fig. 10 ist eine Weiterbildung des in Fig. 9 gezeigten Muldenkörpers 10 dargestellt, in welcher das in Fig. 9 gezeigte Seitenteilmodul 14'b in zwei in Längsrichtung zusammengeschweißte Seitenteilmodule 14'b, 14"b unterschiedlicher Materialstärke und/oder -güte unterteilt ist, wobei das Seitenteilmodul 14'b im Heckbereich 20 des Muldenkörpers 10 eine größere Materialstärke und/oder eine Verschleiß unanfälligere Materialgüte aufweist als das Seitenteilmodul 14"b im Bugbereich 22 des Muldenkörpers 10.

Bevorzugt sind für die in Fig. 10 dargestellte Kombination von Modulen folgende Materialstärken:
1) 12'=8mm, 12"=6mm, 12'" = 4 mm, 14'a = 6 mm, 14"a = 5 mm, 14'b = 5 mm, 14"b = 4 mm, 14'c = 3 mm und 16' = 2 mm

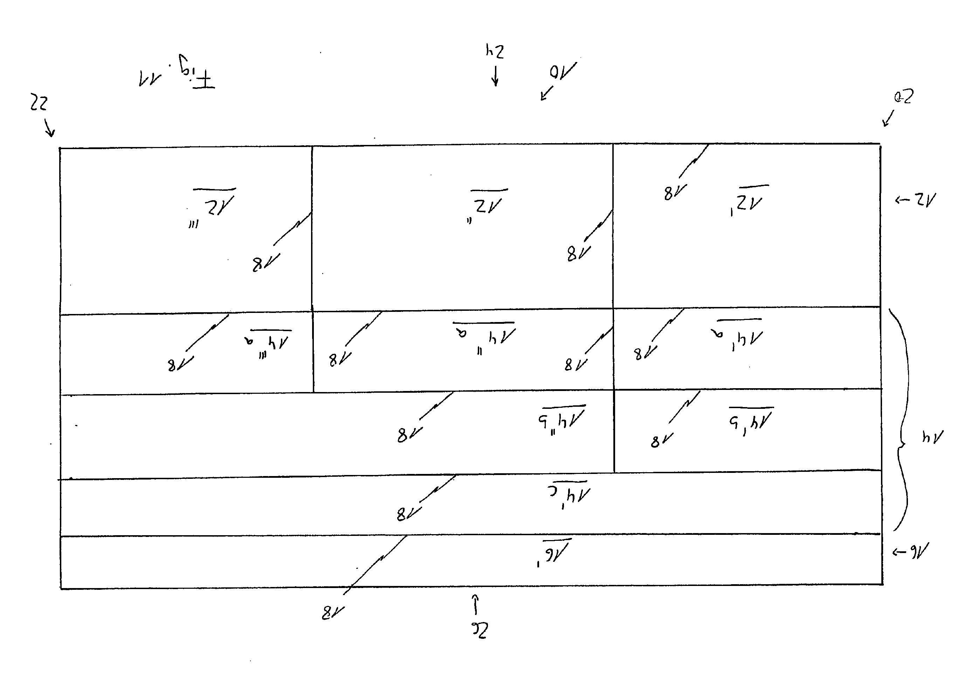

In Fig. 11 ist eine Weiterbildung des in Fig. 10 gezeigten Muldenkörpers 10 dargestellt, in welcher das in Fig. 9 gezeigte Seitenteilmodul 14"a in zwei in Längsrichtung zusammengeschweißte Seitenteilmodule 14"a, 14"'a unterschiedlicher Materialstärke und/oder -güte unterteilt ist, wobei das mittlere Seitenteilmodul 14"a des Muldenkörpers 10 eine größere Materialstärke und/oder eine Verschleiß unanfälligere Materialgüte aufweist als das Seitenteilmodul 14"'a im Bugbereich 22 des Muldenkörpers 10.

Bevorzugt sind für die in Fig. 11 dargestellte Kombination von Modulen folgende Materialstärken:
1) 12' = 8 mm, 12" = 6 mm, 12"' = 4 mm, 14'a = 6 mm, 14"a = 5 mm, 14"'a = 3 mm, 14'b = 4 mm, 14"b = 3 mm, 14'c = 3 mm und 16' = 2 mm

### Bezugszeichenliste

### (ist Teil der Beschreibung)

- 10: Muldenkörper
- 12: Boden
- 12', 12", 12"': Bodenmodul
- 14: Seitenteil
- 14', 14", 14'a, 14'b, 14'c, 14"a, 14"b, 14"'a,: Seitenteilmodul
- 16: Obergurt
- 16': Obergurtmodul
- 18: Schweißnaht
- 20: Heck
- 22: Bug
- 24: unterer Bereich
- 26: oberer Bereich

## Patentansprüche

1. Verfahren zur Herstellung eines Muldenkörpers, insbesondere einer Kippmulde für ein Transportfahrzeug, umfassend folgende Schritte:
a) Bereitstellen von plattenförmigen Modulen vorgegebener Materialgüte und - stärke sowie vorgegebener Abmessung,
b) Anordnen der Module zueinander entsprechend eines für den anzufertigenden Muldenkörper vorbestimmten Anforderungsprofils, wobei die Kanten der sich gegenüberliegend angeordneten Module stumpf aneinander stoßen und I-Nähte bilden,
c) Verbinden der Module durch Laserhybridschweißen der gebildeten Nähte unter Verwendung eines Zusatzstoffes oder vorzugsweise durch Laserschmelzschweißen der gebildeten Nähte ohne Verwendung eines Zusatzstoffes und
d) polygonales Kanten der zusammengeschweißten Module zur Herstellung eines vorgegebenen Muldenkörperprofils.

2. Verfahren nach Anspruch 1, **dadurch gekennzeichnet, dass** die Module derart angeordnet und ausgewählt werden, dass die im späteren Einsatz einer erhöhten Verschleißgefahr unterliegenden Bereiche des anzufertigenden Muldenkörpers durch ein oder mehrere Module gefertigt werden, die eine andere Materialgüte und/oder Materialstärke aufweisen als ein oder mehrere Module, die in einem Bereich des Muldenkörpers angeordnet sind, der im späteren Einsatz einem geringeren Verschleiß unterliegt.

3. Verfahren nach Anspruch 1 oder 2, **dadurch gekennzeichnet, dass** die I-Nähte in einer Lage durchgeschweißt werden, vorzugsweise ohne Schweißnahtvorbereitung.

4. Verfahren nach einem der Ansprüche 1 bis 3, **dadurch gekennzeichnet, dass** die Kanten der Module derart stumpf aneinander stoßen, dass jeweils ein Fügespalt vorzugsweise von weniger als 0,1 mm, besonders bevorzugt von weniger als 0,05 mm, ausgebildet wird.

5. Verfahren nach einem der Ansprüche 1 bis 4, **dadurch gekennzeichnet, dass** gepulst oder vorzugsweise in Form eines Dauerstrichs geschweißt wird.

6. Verfahren nach einem der Ansprüche 1 bis 5, **dadurch gekennzeichnet, dass** plattenförmige Module vorab durch Laserschneiden auf Fertigmaß zugeschnitten werden, wobei gegebenenfalls Endkonturen an den Modulen angebracht werden.

7. Verfahren nach einem der Ansprüche 1 bis 6, **dadurch gekennzeichnet, dass** die Schweißnähte so angeordnet werden, dass diese die Eigenschaften, das Aussehen und/oder die Funktion des Muldenkörperprofils nicht wesentlich beeinflussen.

8. Muldenkörper (10), insbesondere Kippmulde für ein Transportfahrzeug, hergestellt insbesondere nach einem der Ansprüche 1 bis 7, welcher modulartig aufgebaut aus mehreren Modulen durch Laserschmelzschweißen zusammengesetzt ist und durch mehrfaches Abkanten ein Muldenkörperprofil aufweist, umfassend einen longitudinalen Boden (12) aus wenigstens einem Bodenmodul (12', 12", 12"'), zwei longitudinalen Seitenteilen (14) aus jeweils wenigstens einem Seitenwandmodul (14', 14", 14'a, 14"a, 14'b, 14'c) sowie gegebenenfalls zwei longitudinalen Obergurte (16) aus jeweils wenigstens einem Obergurtmodul (16'), wobei ein Bereich des Muldenkörpers, der einem erhöhten Verschleiß unterliegt, aus einem oder mehreren Modulen gefertigt ist, welche eine andere Materialgüte und/oder Materialstärke aufweisen als ein oder mehrere Module, die in einem Bereich des Muldenkörpers angeordnet ist, der einem geringeren Verschleiß unterliegt.

9. Muldenkörper (10) nach Anspruch 8, **dadurch gekennzeichnet, dass** der Boden (12), die Seiteteile (14) und die gegebenenfalls vorhandenen Obergurte (16) aus Modulen (12', 12", 12"', 14', 14", 14'a, 14"a, 14'b, 14'c, 16') zusammengeschweißt sind, die jeweils eine Materialstärke von 2 bis 10 mm aufweisen, wobei die Materialstärke wenigstens eines Bodenmoduls vorzugsweise 4 bis 8 mm, die Materialstärke je wenigstens eines Seitenteilmoduls vorzugsweise 3 bis 6 mm und/oder die Materialstärke je wenigstens eines gegebenenfalls vorhandenen Obergurtmoduls vorzugsweise 2 bis 6 mm betragen.

10. Muldenkörper (10) nach Anspruch 8 oder 9, **dadurch gekennzeichnet, dass** die Materialstärke wenigstens eines Bodenmoduls größer ist als die Materialstärke je wenigstens eines Seitenteilmoduls und/oder je wenigstens eines gegebenenfalls vorhandenen Obergurtmoduls und/oder dass die Materialstärke je wenigstens eines Seitenteilmoduls größer ist als die Materialstärke je wenigstens eines gegebenenfalls vorhandenen Obergurtmoduls.

11. Muldenkörper (10) nach einem der Ansprüche 8 bis 10, **dadurch gekennzeichnet, dass** der Boden (12) aus mehreren in Querrichtung nebeneinander angeordneten Bodenmodulen und/oder aus mehreren in Längsrichtung hintereinander angeordneten Bodenmodulen (12', 12", 12"') zusammengeschweißt ist.

12. Muldenkörper (10) nach Anspruch 11, **dadurch gekennzeichnet, dass** ein oder mehrere Bodenmodule im Heckbereich des Muldenkörpers eine größere Materialstärke und/oder eine Verschleiß unanfälligere Materialgüte aufweisen als ein oder mehrere Bodenmodule im Bugbereich des Muldenkörpers.

13. Muldenkörper (10) nach einem der Ansprüche 8 bis 12, **dadurch gekennzeichnet, dass** jedes Seitenteil (14) aus mehreren in Querrichtung nebeneinander angeordneten Seiteneilmodulen (14'a, 14'b, 14'c) und/oder aus mehreren in Längsrichtung hintereinander angeordneten Seitenteilmodulen (14', 14") zusammengeschweißt ist.

14. Muldenkörper (10) nach Anspruch 13, **dadurch gekennzeichnet, dass** ein oder mehrere Seitenteilmodule im Heckbereich des Muldenkörpers eine größere Materialstärke und/oder eine Verschleiß unanfälligere Materialgüte aufweisen als ein oder mehrere Seitenteilmodule im Bugbereich des Muldenkörpers und/oder dass ein oder mehrere Seitenteilmodule im unteren Bereich des Muldenkörpers eine größere Materialstärke und/oder eine Verschleiß unanfälligere Materialgüte aufweisen als ein oder mehrere Seitenteilmodule im oberen Bereich des Muldenkörpers.

15. Verwendung eines Muldenkörpers, insbesondere nach einem der Ansprüche 8 bis 14, oder eines insbesondere nach einem Verfahren gemäß der Ansprüche 1 bis 7 hergestellten Muldenkörpers als Mulden, insbesondere Kippmulden, im Nutzfahrzeug- und landwirtschaftlichen Anhängerbau, als Behälter für die Containerwechselsystemtechnik oder als Gleisbauwannen für den Schienenfahrzeugbau.
